# EUROPÄISCHE PATENTSCHRIFT

(11) **EP 0 387 498 B1**
(45) Veröffentlichungstag und Bekanntmachung des Hinweises auf die Patenterteilung: **02.11.1995**
(21) Anmeldenummer: 90101148.6
(22) Anmeldetag: 20.01.1990
(51) Int. Cl.: H04L 25/03

(54) **Digitalübertragungssystem zur Übertragung mehrerer binärer Signale über Leiterpaare**
Digital transmission system for transmitting a plurality of binary signals on a conductor pair
Système de transmission numérique pour transmettre plusieurs signaux binaires sur une paire de conducteurs

(30) Priorität: 24.02.1989 DE 3905695
(43) Veröffentlichungstag der Anmeldung: 19.09.1990
(73) Patentinhaber: KE KOMMUNIKATIONS-ELEKTRONIK GMBH & CO, D-30179 Hannover (DE)
(72) Erfinder: Wellhausen, Hans-Werner, Dipl.-Ing., D-6100 Darmstadt (DE); Graf, Klaus-Peter, Dipl.-Ing., D-8000 München (DE); Huber, Johannes, Dr.-Ing., D-8160 Miesbach (DE); Tröndle, Karlheinz, Prof. Dr.-Ing., D-8000 München (DE)
(74) Vertreter: Döring, Roger, Dipl.-Ing.

(56) Entgegenhaltungen:
- NTG-FACHBERICHTE Vorträge der NTG-fachtagung 25-27 März 1985 Berlin.S.66-73.K. P.Graf et al: "Fast Optimale Empfänger für die Digitalsignal-übertragung über Symmetrische Leitungen"
- IEEE ICC 88 PHILADELPHIA US 12-15 Juni 1988 heft 1 von 3 S.380-384 K.Zhou et al:"Coded Reduced-Bandwidth QAM with Decision-Feedback Equalization"
- NTZ NACHRICHTECHNISCHE ZEITSCHRIFT. Bd. 38, Nr. 5, Mai 1985, BERLIN DE Seiten 322 - 336; H.W.WELLHAUSEN ET AL: 'Quaternäre Basisbandübertragung mit SchwellenwertDetection '
- IEEE TRANSACTIONS ON COMMUNICATION TECHNOLOGY. Bd. 36, Nr. 4, April 1988, NEW YORK US Seiten 401 - 409; M.VEDAT-EYUBOGLU: 'Detection of Coded Modulation Signals on Linear,Severely Distorted Channel s Using Decision Feedback Noise Prediction with Interleav ing" '

## Beschreibung

Die Erfindung betrifft ein Digitalübertragungssystem zur gleichzeitigen Übertragung mehrerer Digitalsignale über getrennte, in einem vielpaarigen Kabel liegende Leiterpaare, mit einer Empfängerstruktur, umfassend einen linearen Entzerrer für die empfangenen Digitalsignale, einen an den Entzerrer angeschalteten Schwellenwert-Detektor, an dessen Ausgang ein Störwertprädiktor angeschlossen ist, und einen demselben nachgeschalteten entscheidungsrückgekoppelten Entzerrer für das am Ausgang des Schwellenwert-Detektors anliegende detektierte Signal (DE-Z "NTG-Fachberichte", Band 88, 1985, Seiten 66 bis 73).

Digitalübertragungssysteme mit maximalen Bitraten von 2 Mbit/s zur Vielfachausnutzung von vielpaarigen symmetrischen NF-Kabeln sind beispielsweise aus der eingangs erwähnten DE-Z bekannt. Vorwiegend werden AMI- oder HDB3-codierte Leitungssignale über den nyquistentzerrten Kanal eines Leiterpaars übertragen und mittels eines Schwellenwert-Detektors detektiert. Diese gebräuchlichen Verfahren sind sehr empfindlich gegen Nebensprechstörungen durch parallel laufende, in ein und demselben Kabel untergebrachte gleichartige Übertragungssysteme und gegen Impulsstörungen, die durch die Zeichenübertragung elektromechanischer Wählsysteme hervorgerufen werden. Diese Störungen begrenzen einerseits die zu überbrückende maximale Feldlänge und andererseits bei fester Feldlänge die Anzahl der in einem Kabel unterzubringenden gleichartigen Übertragungssysteme.

Aus der eingangs erwähnten DE-Z "NTG-Fachberichte" ist ein digitales Übertragungssystem mit einer Empfängerstruktur bekannt, welche bei der Übertragung von mehreren Digitalsignalen über vieladrige Kabel für eine Störungskorrelation bei Störungen sorgt, die durch das Nebensprechen weiterer Digitalsignale sowie durch die Zeichenübertragung elektromechanischer Wählsysteme über ein verzerrendes Übertragungsmedium hervorgerufen werden.

Der Erfindung liegt die Aufgabe zugrunde, das eingangs beschriebene Digitalübertragungssystem so weiterzubilden, daß die Störsicherheit gegen Nebensprechen und Wählimpulse erheblich vergrößert wird.

Diese Aufgabe wird gemäß der Erfindung dadurch gelöst,
- daß durch den Störwertprädiktor aus dem Differenzsignal zwischen dem detektierten Signal und dem um eine Symboldauer verzögerten, nyquistentzerrten Signal ein Störschätzsignal abgeleitet wird, das mit den Ausgangssignalen der Entzerrer zu einem Detektoreingangssignal verknüpft wird und
- daß für eine adaptive Einstellung der Entzerrer einerseits und des Störwertprädiktors andererseits voneinander getrennte Einstellalgorithmen mit unterschiedlichen Geschwindigkeiten verwendet werden.

Mit diesem Digitalübertragungssystem werden die binären, digitalen Quellensignale in redundanzfreie quaternäre Sendesignale umcodiert. Die empfangenen Signale werden nach den bekannten Nyquistkriterien adaptiv symbolinterferenzfrei entzerrt, und die auf dem Übertragungsweg verloren gegangenen niederfrequenten Signalteile werden durch eine quantisierte Rückkopplung (entscheidungsrückgekoppelte Entzerrung) zurückgewonnen. Über die interferenzfrei entzerrten Signale wird durch den Schwellenwert-Detektor entschieden. Aus der Differenz zwischen einem zum optimalen Detektionszeitpunkt vorliegenden Empfangssignalwert und dem aufgrund der Entscheidung geschätzten Empfangssignalnutzwert, wird durch Subtraktion eine Schätzung der Störung gebildet. Aufgrund vorangegangener Schätzwerte und des aktuellen Schätzwerts wird beispielsweise durch ein lineares Filter eine Prädiktion der Störung beim nächsten Detektionszeitpunkt vorgenommen. Dieser Prädiktionswert wird vom Signalwert beim nächsten Detektionszeitpunkt subtrahiert, um eine Verringerung der wirksamen Störleistung zu erreichen. Diese Störwertprädikation ist möglich, da aufgrund des Nebensprechfrequenzgangs sowie durch die Entzerrung lineare statistische Bindungen innerhalb des Störprozesses entstehen, die zum überwiegenden Teil durch Nebensprechen gleichartiger Signale im vielpaarigen Kabel erzeugt werden. Der Störwertprädiktor wird zur Minimierung der verbleibenden Reststörleistung ebenfalls adaptiv nachgeführt.

Das Empfängerprinzip erreicht damit die größtmögliche Störsicherheit gegenüber Nebensprechstörungen bei der Verwendung einer Schwellenwertdetektion. Jedoch auch gegenüber einer Optimaldetektion (Korrelationsempfänger für alle möglichen Symbolfolgen) sind nur geringe Störabstandsverluste hinzunehmen.

Ein wesentlicher Vorteil dieses Digitalübertragungssystem liegt in der getrennten Einstellmöglichkeit der Filter für die lineare und die entscheidungsrückgekoppelte Entzerrung sowie für die Störwertprädiktion. Es werden dazu unterschiedliche Einstellalgorithmen für diese Filter und unterschiedliche Adaptionsgeschwindigkeiten für Entzerrung und Störwertprädiktion eingesetzt. Durch die getrennten Einstellalgorithmen für Entzerrer (Zero-Forcing-Algorithmus) und Störwertprädikation (Minimum-Mean-Square- Algorithmus) wird im stationären Betriebsfall eine wirksamere Störunterdrückung erreicht als bei der Wahl eines gemeinsamen Einstellverfahrens für alle Filter.

Eine gegenüber der Entzerrung verlangsamte Einstellung der Störwertprädiktion bewirkt zusätzlich eine deutliche Aufweitung des Bereichs für Übertragungseigenschaften (Kabellänge, Aderdurchmesser, Störungsart), innerhalb derer bei gleicher Koeffizientenzahl der digitalen Filter eine erfolgreiche Adaption möglich ist.

Bei diesem Digitalübertragungssystem kann außerdem zur Verringerung der Koeffizientenzahl des linearen und des entscheidungsrückgekoppelten Teils des adaptiven, digital realisierten Entzerrers eine analoge Kompromißvorentzerrung vorgenommen werden. Diese wird so ausgelegt, daß ein Whitened-Matched-Filter, wie in "Huber, J.: Detektoren und Optimalfilter für Digitalsignale mit Impulsinterferenzen, Teil I und Teil II, Frequenz 41 (1987), Seiten 161 bis 167 und Seiten 189 bis 196" beschrieben, als Faktor enthalten ist, wodurch ein informationsverlustfreier Übergang vom zeitkontinuierlichen Signal zu zeitdiskreten Abtastwerten gewährleistet wird. Damit entspricht dieser Kompromißentzerrer dem optimalen Nyquistfilter für die im Mittel erwartete Kabeldämpfung und Nebensprechübertragungsfunktion. Dabei ergeben sich zumeist für den Impulsformerteil des Kompromißentzerrers (roll-off-Factor) Werte, die kleiner 1 zu wählen sind und in der Gegend zwischen 0,3 und 0,6 zu optimalen Störabstandsgewinnen führen.

Als weiterer Vorteil des Digitalübertragungssystems ist eine Optimierung des Detektionszeitpunktes anhand der im linearen adaptiven Entzerrer eingestellten Koeffizienten zu sehen, welche ebenfalls adaptiv vorgenommen wird. Somit werden Langzeitschwankungen von Kabeleigenschaften oder auch des Oszillators für die Taktrückgewinnung im Empfänger ausgeglichen.

Das Digitalübertragungssystem ist vorteilhaft im Ortsanschlußleitungsnetz zur Erhöhung der Feldlänge, z. B. bei einer 2,048-Mbit/s-Übertragung, einsetzbar. Die überwiegende Zahl der Teilnehmer wird dadurch ohne Zwischenregenerator erreicht. Aufgrund der großen Störsicherheit gegen Nebensprech- und Impulsstörungen ist ein sehr hoher Beschaltungsgrad der Ortsanschlußkabel mit gleichartigen 2,048-Mbit/s-Systemen bei relativ großer Feldlänge erzielbar. Durch eine geschickte Wahl der unterschiedlichen Einstellalgorithmen für die Entzerrung und die Störwertprädikation wird die Hochpaßfilterung vollständig gegen instationäre Impulsstörungen wirksam.

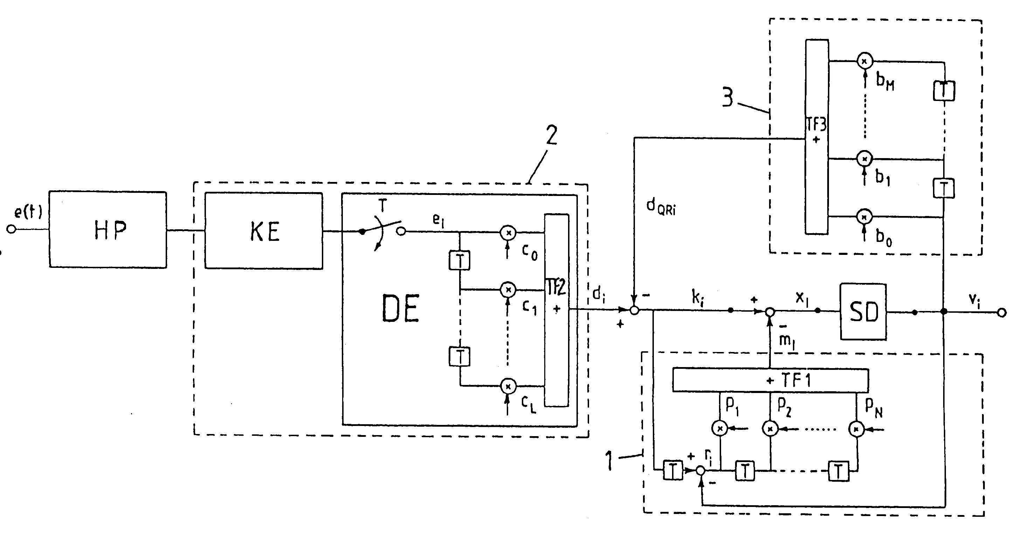

Ein Ausführungsbeispiel des Erfindungsgegenstandes ist in der Zeichnung dargestellt und wird im folgenden näher beschrieben.

Über ein Leiterpaar eines vielpaarigen Kabels wird ein redundanzfreies, 4-stufiges Leitungssignal übertragen. Es wird auf dem Weg zum Empfänger gemäß der Übertragungsfunktion des Leiterpaares stark verzerrt und gedämpft. Es liegt als Nutzsignal e(t) am Empfängereingang. Das Nutzsignal e(t) wird von Nebensprechstörungen, z. B. von gleichartigen, auf Nachbaradern betriebenen Übertragungssystemen und von instationären Impulsstörungen elektromechanischer Wählsysteme, überlagert.

Sowohl das Nutzsignal e(t) als auch sämtliche Störungen am Empfängereingang werden mit einem Hochpaß HP gedämpft. Dieser Hochpaß HP reduziert die niederfrequenten Impulsstörungen. Die Komponenten eines linearen Entzerrers 2 und eines entscheidungsrückgekoppelten Entzerrers 3 beseitigen die Impulsinterferenzen des Nutzsignals e(t) nach dem 1. Nyquistkriterium. Der lineare Entzerrer 2 ist in einen analogen Kompromißentzerrer KE und einen einstellbaren digitalen Entzerrer DE aufgeteilt. Dadurch wird die Anzahl der notwendigen Koeffizienten cₒ bis c_{L} des digitalen Entzerrers DE reduziert.

Das Ausgangssignal des fest eingestellten analogen Kompromißentzerrers KE als Vorentzerrer wird im Symboltakt T abgetastet. Es entsteht eine diskrete Folge von Abtastwerten <eᵢ>, die mit einem Transversalfilter TF2 des digitalen Entzerrers DE entsprechend der Einstellung der Koeffizienten cₒ bis c_{L} bewertet die zeitdiskrete Folge <dᵢ> ergibt. Aus dem detektierten Signal vᵢ wird über ein Transversalfilter TF3 des entscheidungsrückgekoppelten Entzerrers 3 entsprechend den Koeffizienten bₒ bis b_{M} ein Kompensationssignal d_{QRi} abgeleitet. Das Kompensationssignal d_{QRi} soll die durch den Hochpaß HP bedingte Verzerrung rückgängig machen. Das entzerrte Signal mit seinen Abtastwerten ki entsteht nun durch Differenzbildung kᵢ = dᵢ - d_{QRi}.

Die adaptive Einstellung der Koeffizienten cₒ bis c_{L} und bₒ bis b_{M} erfolgt nach dem Zero-Forcing-Algorithmus. Das entzerrte Signal kᵢ enthält einen Nutz- und einen Störsignalanteil.

Völlig unabhängig von der Einstellung der Entzerrung erfolgt die Adaption des Störwertprädiktors 1 mit seinen Koeffizienten p₁ bis p_{N}. Hier wird der Minimum-Mean-Square-Algorithmus verwendet. Die Abtastwerte des Prädiktoreingangssignal rᵢ = kᵢ₋₁-vᵢ entstehen durch Subtraktion des detektierten Signals vᵢ von dem um eine Symboldauer verzögerten, kompensierten und entzerrten Signal kᵢ, das mit einer farbigen, besonders durch das Nebensprechen bedingten Störung überlagert ist. Diese Abtastwerte des Differenzsignals rᵢ werden mit dem Transversalfilter TF1 des Störwertprädiktors 1 derart bewertet, daß der vorhersagbare Anteil der Störung mᵢ vor dem Schwellenwert-Detektor SD von den Abtastwerten kᵢ abgezogen wird. Somit liegen am Eingang des Schwellenwert-Detektors SD nur noch der Nutzsignal- und der Störanteil ohne statistische Bindung xᵢ. Der Entscheidungsvorgang erfolgt deshalb mit einer durch Dekorrelation bedingten größeren Störsicherheit.

## Patentansprüche

1. Digitalübertragungssystem zur gleichzeitigen Übertragung mehrerer Digitalsignale über getrennte, in einem vielpaarigen Kabel liegende Leiterpaare, mit einer Empfängerstruktur, umfassend einen linearen Entzerrer (2) für die empfangenen Digitalsignale, einen an den Entzerrer (2) angeschalteten Schwellenwert-Detektor (SD), an dessen Ausgang ein Störwertprädiktor (1) angeschlossen ist, und einen demselben nachgeschalteten entscheidungsrückgekoppelten Entzerrer (3) für das am Ausgang des Schwellenwert-Detektors (SD) anliegende detektierte Signal (vᵢ), dadurch gekennzeichnet,
- daß durch den Störwertprädiktor (1) aus dem Differenzsignal (rᵢ) zwischen dem detektierten Signal (vᵢ) und dem um eine Symboldauer verzögerten, nyquistentzerrten Signal (kᵢ₋₁) ein Störschätzsignal (mᵢ) abgeleitet wird, das mit den Ausgangssignalen der Entzerrer (2,3) zu einem Detektoreingangssignal (xᵢ) verknüpft wird und
- daß für eine adaptive Einstellung der Entzerrer (2,3) einerseits und des Störwertprädiktors (1) andererseits voneinander getrennte Einstellalgorithmen mit unterschiedlichen Geschwindigkeiten verwendet werden.

2. Digitalübertragungssystem nach Anspruch 1, dadurch gekennzeichnet, daß der Störwertprädiktor (1) mit einer gegenüber der Einstellgeschwindigkeit für die Entzerrer (2,3) reduzierten Einstellgeschwindigkeit adaptiert wird.

3. Digitalübertragungssystem nach Anspruch 1 oder 2, dadurch gekennzeichnet, daß ein Zero-Forcing-Algorithmus für die adaptive Entzerrung und ein Minimum-Mean-Square-Algorithmus für die adaptive Störwertprädiktion verwendet werden.

4. Digitalübertragungssystem nach einem der Ansprüche 1 bis 3, dadurch gekennzeichnet, daß die Empfängerstruktur einen Hochpaß (HP) aufweist, der dem linearen Entzerrer (2) vorgeschaltet ist.

5. Digitalübertragungssystem nach einem der Ansprüche 1 bis 4, dadurch gekennzeichnet, daß der lineare Entzerrer (2) aus einem fest einstellbaren analogen Kompromißentzerrer (KE) und einem nachgeschalteten digitalen Entzerrer (DE) besteht.

## Claims

1. Digital transmission system for the simultaneous transmission of a plurality of digital signals via separate conductor pairs situated in a multi-pair cable, having a receiver structure comprising a linear equalizer (2) for the received digital signals, a threshold detector (SD) which is connected to the equalizer (2) and to whose output a fault predictor (1) is connected, and a decision-feedback equalizer (3), connected downstream of the latter, for the detected signal (Vᵢ) present at the output of the threshold detector (SD), characterized
- in that from the differential signal (rᵢ) between the detected signal (vᵢ) and the Nyquist-equalized signal (Kᵢ₋₁) delayed by a symbol duration, the fault predictor (1) derives an estimated noise signal (mᵢ) which is combined with the output signals of the equalizers (2, 3) to form a detector input signal (xᵢ), and
- in that mutually separate setting algorithms having different speeds are used for adaptive setting of the equalizers (2, 3) on the one hand, and of the fault predictor (1) on the other hand.

2. Digital transmission system according to Claim 1, characterized in that the fault predictor (1) is adapted at a setting speed which is reduced with respect to the setting speed for the equalizers (2, 3).

3. Digital transmission system according to Claim 1 or 2, characterized in that a zero-forcing algorithm is used for the adaptive equalization, and a minimum-mean-square algorithm is used for the adaptive fault prediction.

4. Digital transmission system according to one of Claims 1 to 3, characterized in that the receiver structure has a high-pass filter (HP) which is connected upstream of the linear equalizer (2).

5. Digital transmission system according to one of Claims 1 to 4, characterized in that the linear equalizer (2) consists of a permanently settable analog equalizer (KE) and a down-stream digital equalizer (DE).

## Revendications

1. Système de transmission numérique pour la transmission simultanée de plusieurs signaux numériques sur des paires de conducteurs situées dans un câble à plusieurs paires, comportant une structure réceptrice comprenant un égaliseur linéaire (2) pour les signaux numériques reçus, un détecteur de valeur de seuil (D) qui est relié à l'égaliseur (2) et à la sortie duquel est relié un prédicteur de valeur de bruit (1), ainsi qu'un égaliseur (3), mis en circuit en aval du prédicteur et opérant avec rétroaction de décision, pour le signal détecté (Vᵢ) qui se trouve à la sortie du détecteur de valeur de seuil (SD), caractérisé par le fait,
- que, grâce au prédicteur de valeur de bruit (1), on fait dériver, à partir du signal de différence (rᵢ) entre le signal détecté (vᵢ) et le signal (kᵢ₋₁), retardé d'une durée symbolique et égalisé au sens du critère de Nyquist, un signal d'estimation de bruit (mᵢ) que l'on relie logiquement aux signaux de sortie des égaliseurs (2, 3) pour obtenir un signal (xᵢ) d'entrée du détecteur, et
- que pour prescrire un réglage adaptatif des égaliseurs (2,3) d'une part et du préducteur de valeur de bruit (1), d'autre part, on emploie, à des vitesses différentes, des algorithmes de prescription de réglage distincts l'un de l'autre.

2. Système de transmission numérique selon la revendication 1, caractérisé par le fait que l'on adapte le prédicteur de valeur de bruit (1) à une vitesse de prescription de réglage réduite par rapport à la vitesse de prescription de réglage pour les égaliseurs (2, 3).

3. Système de transmission numérique selon la revendication 1 ou 2, caractérisé par le fait que l'on emploie un algorithme forçant à zéro pour l'égalisation adaptative et un algorithme de la valeur quadratique moyenne minimale pour la prédiction adaptative de la valeur de bruit.

4. Système de transmission numérique selon l'une des revendications 1 à 3, caractérisé par le fait que la structure réceptrice présente un filtre passe-haut (HP) mis en circuit en amont de l'égaliseur linéaire (2).

5. Système de transmission numérique selon l'une des revendications 1 à 4, caractérisé par le fait que l'égaliseur linéaire (2) est constitué d'un égaliseur analogique de compromis (KE) à réglage fixe et d'un égaliseur numérique (DE) mis en circuit à la suite.
